# EUROPÄISCHE PATENTANMELDUNG

(11) **EP 1 426 593 A2**
(43) Veröffentlichungstag der Anmeldung: **09.06.2004**
(21) Anmeldenummer: 03023173.2
(22) Anmeldetag: 13.10.2003
(51) Int. Cl.: F02D 41/12, F02D 41/02, F02D 41/00

(54) **Verfahren zum Aufrechterhalten optimaler Bedingungen in einem Katalysator einer Brennkraftmaschine während einer unbefeuerten Betriebsphase**

(30) Priorität: 26.11.2002 DE 10254979
(71) Anmelder: ROBERT BOSCH GMBH, 70442 Stuttgart (DE)
(72) Erfinder: Moninger, Thomas, 73054 Eislingen (DE); Von Andrian, Stephan, 70563 Stuttgart (DE)

(57) **Zusammenfassung**

Die Erfindung bezieht sich auf ein Verfahren zum Aufrechterhalten optimaler Bedingungen in einem Katalysator (KAT) einer Brennkraftmaschine während einer unbefeuerten Betriebsphase derselben. Optimale Bedingungen im Katalysator werden dadurch erzielt, dass in der unbefeuerten Betriebsphase eine auf die Sauerstoffzufuhr vom Ansaugrohr her einwirkende Ventilanordnung (EV, AV, SV) so gesteuert wird, dass die Sauerstoffzufuhr zum Katalysator zumindest teilweise unterbunden wird (Fig. 1).

## Beschreibung

Die Erfindung bezieht sich auf ein Verfahren zum Aufrechterhalten optimaler Bedingungen in einem Katalysator einer Brennkraftmaschine während einer unbefeuerten Betriebsphase derselben.

### Stand der Technik

Bisher wurde nach dem internen Kenntnisstand der Anmelderin (ohne vorliegenden druckschriftlichen Beleg) möglichst günstige Bedingungen im Katalysator einer Brennkraftmaschine im Zusammenhang mit einer unbefeuerten Betriebsphase, insbesondere einer Schubphase, nach deren Beendigung ein sogenanntes Katalysator-Ausräumen durchgeführt. Hierbei wird der während der Schubphase der Brennkraftmaschine mit Abschaltung von einzelnen Einspritzventilen erhöhte Sauerstoffanteil im Katalysator dadurch wieder entfernt, dass die Luftzahl im Brennraum in Richtung "fett" verschoben wird, um wieder den normalen Betriebszustand des Katalysators zu erreichen. Der Kraftstoffüberschuss wird solange beibehalten, bis die Lambdasonde im Abgasstrom einen regenerierten Katalysator anzeigt. Durch das Katalysator-Ausräumen ergibt sich infolge der fetten Betriebsphase ein entsprechender Mehrverbrauch und eine erhöhte Belastung des Katalysators kann zur Verkürzung seiner Lebensdauer führen.

Der Erfindung liegt die Aufgabe zugrunde, ein Verfahren der eingangs genannten Art bereit zu stellen, mit dem die Betriebsbedingungen eines Katalysators im Zusammenhang mit einer unbefeuerten Betriebsphase verbessert werden.

### Vorteile der Erfindung

Diese Aufgabe wird mit den Merkmalen des Anspruchs 1 gelöst. Hiernach ist vorgesehen, dass in der unbefeuerten Betriebsphase eine auf die Sauerstoffzufuhr vom Ansaugrohr her einwirkende Ventilanordnung so gesteuert wird, dass die Sauerstoffzufuhr zum Katalysator zumindest teilweise unterbunden wird.

Durch die vollständige oder teilweise Unterbindung der Sauerstoffzufuhr zum Katalysator wird ein Katalysator-Ausräumen vollkommen oder (zum Erzeugen eines gegebenenfalls erforderlichen Saugrohr-Unterdruckes) weitgehend vermieden. Dadurch ergibt sich ein Verbrauchsvorteil, da die fette Betriebsphase nach dem unbefeuerten Betrieb der Brennkraftmaschine, insbesondere einer Schubphase vermieden wird. Ein weiterer Vorteil liegt in der geringeren Belastung des Katalysators, wodurch seine Lebensdauer erhöht wird. Dies gilt vor allem bei hohen Drehzahlen und Motorlasten.

Handelt es sich bei der Brennkraftmaschine um einen an sich bekannten Verbrennungsmotor mit variabler Steuerung der Gaswechselventile (Einlass- und Auslasseventile), so besteht eine vorteilhafte Ausgestaltung des Verfahrens darin, dass als Ventilanordnung mindestens ein variabel steuerbares Einlassventil und/oder Auslassventil zumindest eines Brennraums geschlossen wird/werden. Zur variablen Ventilsteuerung sind an sich verschiedene Ausführungen bekannt, beispielsweise ein rein mechanisches System, bei dem ein Schlepphebel von einer Nockenwelle zur variablen Steuerung entkoppelt wird. Ferner kann die variable Ventilsteuerung auch mittels elektrohydraulischer oder elektromagnetischer Ansteuerung der Gaswechselventile vorgenommen werden. Dabei wird jedes Gaswechselventil von einem Aktor betätigt, wodurch eine vollkommen freie Ansteuerung der Gaswechselventile ermöglicht wird. Die Deaktivierung der Gaswechselventile, Einlassventile und/oder Auslassventile, führt je nach System zu einer Energieeinsparung. Bei mechanischen Systemen kommt es zu einem Reibvorteil, da die Gaswechselventile nicht mehr gegen eine Ventilfeder geöffnet werden müssen. Bei elektrohydraulischer oder elektromagnetischer Ansteuerung der Gaswechselventile kommt es zu einer geringeren elektrischen Belastung, da die Aktoren zum Öffnen der Ventile nicht oder zumindest nicht in erheblichem Maße betrieben werden müssen. Dies führt über die geringere Generatorbelastung zu einem reduzierten Fahrwiderstand. Als weiterer Vorteil lässt sich die Reduktion der Geräuschemission anführen, da im Abschaltbetrieb während der Schubphase aufgrund des fehlenden Verbrennungsgeräusches das Ventilgeräusch einen merklichen Anteil an den Gesamtgeräuschen ausmacht.

Eine weitere vorteilhafte Ausgestaltung ergibt sich dadurch, dass als Ventilanordnung mindestens ein im Sauerstoffzufuhrkanal angeordnetes zusätzliches Steuerventil geschlossen wird. Durch das zusätzliche Steuerventil in dem Sauerstoffzuführkanal, beispielsweise in dem Ansaugrohr, ergibt sich eine weitere Steuermöglichkeit.

Ist weiterhin vorgesehen, dass das mindestens eine Einlass- und/oder Auslassventil individuell für jeden Zylinder nach einer vorgegebenen Funktionalität gesteuert wird/werden, kann in Abhängigkeit von unterschiedlichen Anforderungen, die z.B. mittels einer Motorsteuerung berücksichtigt werden können, eine verfeinerte Steuerung zum Beeinflussen der zum Katalysator strömenden Luftmenge durchgeführt werden.

Weitere motorische Anforderungen können dadurch berücksichtigt werden, dass die Ventilanordnung während der unbefeuerten Betriebsphase in Abhängigkeit eines geforderten Saugrohrunterdrucks gesteuert wird.

Eine vorteilhafte Steuerung zum Aufrechterhalten optimaler Bedingungen in dem Katalysator ergibt sich auch dadurch, dass in der unbefeuerten Betriebsphase zum Katalysator durchgepumpte Luft integriert wird und in Abhängigkeit von dem Integrationsergebnis die Ventilanordnung gesteuert wird.

### Zeichnung

Die Erfindung wird nachfolgend anhand von Ausführungsbeispielen unter Bezugnahme auf die Zeichnungen näher erläutert. Es zeigen:
- Fig. 1: eine schematische Darstellung zur grundlegenden Vorgehensweise bei dem Verfahren zum Aufrechterhalten optimaler Bedingungen in einem Katalysator einer Brennkraftmaschine während einer unbefeuerten Betriebsphase,
- Fig. 2: eine schematische Darstellung zur weiteren Ausgestaltung des Verfahrens nach Fig. 1,
- Fig. 3: eine schematische Darstellung eines Verfahrensabschnitts bei dem Verfahren nach Fig. 1 oder 2 und
- Fig. 4: eine schematische Darstellung eines Ausschnitts der Brennkraftmaschine, bei der das Verfahren nach den Fig. 1 bis 3 durchführbar ist.

### Ausführungsbeispiel

Zunächst wird anhand der in Fig. 4 gezeigten Darstellung des Ausschnitts einer Brennkraftmaschine ein grundsätzlicher Aufbau gezeigt, bei dem einem Brennraum BR über ein Ansaugrohr AR ein Kraftstoff/Luftgemisch unter Steuerung mittels eines Einlassventils EV zugeführt wird. Verbrannte Abgase gelangen unter Steuerung eines Auslassventils AV in einen Abgaskanal AG, in dem ein Katalysator KAT zum Erzielen schadstofffreier Abgase angeordnet ist. Im Ansaugrohr AR befinden sich auch eine Drosselklappe D zum Regulieren der Luftzufuhr und beispielsweise auch ein Steuerventil SV, mit dem ebenfalls die Luftströmung unterbunden werden kann. Eine Anfettung des Kraftstoff/Luftgemisches kann durch Steuerung eines ebenfalls in dem Ansaugrohr AR angeordneten Einspritzventils E variiert oder ganz abgeschaltet werden. Die Steuerung des Einspritzventils E, des Einlassventils EV und Auslassventils AV (Gaswechselventile) sowie der Drosselklappe D und des gegebenenfalls vorhandenen weiteren Steuerventils SV wird vorzugsweise über eine Steuereinheit ST, insbesondere eine Motorsteuerung, in Abhängigkeit eingehender und berechneter Motorbetriebsdaten durchgeführt. Auch eine Abgasrückführung über eine Rückführleitung mit Rückführventil kann vorgesehen sein.

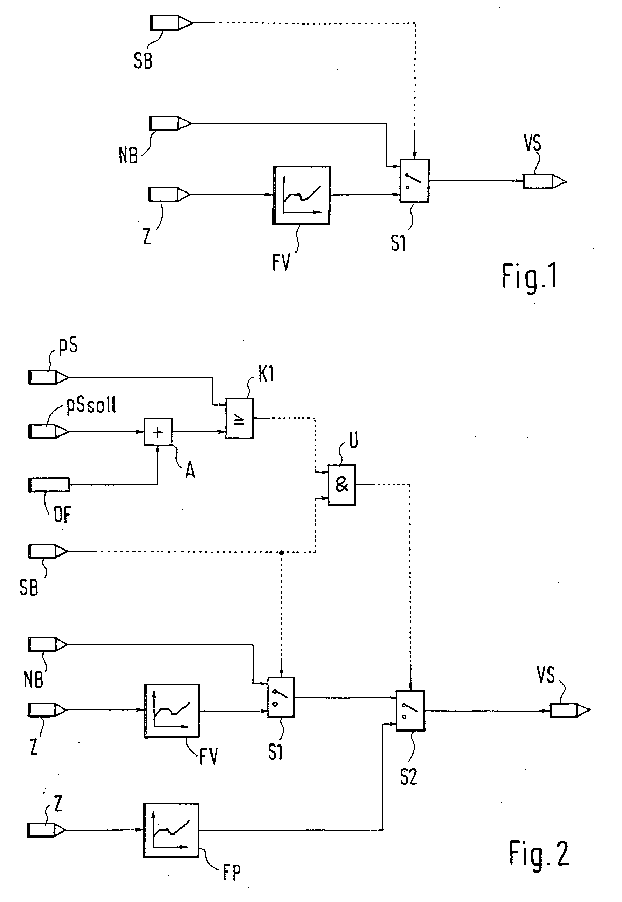

Fig. 1 stellt in schematischer Ansicht die Grundidee des Verfahrens zum Aufrechterhalten optimaler Bedingungen in dem Katalysator KAT der Brennkraftmaschine während einer unbefeuerten Betriebsphase, insbesondere einer Schubphase, dar, in der ein Schub(abschalt)betrieb unter Abschalten einzelner Einspritz-ventile E und geänderter Steuerung weiterer Betriebsgrößen gegenüber einem Normalbetrieb NB erfolgt. Solange der Schubbetrieb SB nicht vorliegt, befinden sich insbesondere auch die Gaswechselventile EV, AV im Normalbetrieb NB. Bei Schubbetrieb SB kann dagegen über eine vorgegebene, insbesondere programmierte Funktionalität FV, beispielsweise für jeden Zylinder Z individuell über eine Kennlinie, festgelegt werden, ob der Zylinder Z weiterhin Luft durch den Luftströmungskanal von dem Ansaugrohr AR zu dem Abgaskanal AG und dem Katalysator KAT durchpumpt oder ob z.B. sowohl die Auslass- AV als auch die Einlassventile EV oder nur die Einlassventile EV oder nur die Auslassventile AV des betreffenden Zylinders Z geschlossen werden. Um das Katalysator-Ausräumen, d.h. eine erhöhte Anfettung nach dem Schubbetrieb SB zu vermeiden, sollte möglichst keine Luft in den Katalysator KAT gepumpt werden. Deshalb werden im Schubbetrieb SB z.B. alle Einlassventile EV und/oder Auslassventile AV aller Zylinder Z geschlossen. Alternativ oder zusätzlich kann das gegebenenfalls in dem Luftströmungskanal, vorzugsweise Ansaugrohr AR vorhandene Steuerventil SV geschlossen werden. Die Ventilansteuerung VS erfolgt dann entsprechend dem Normalbetrieb NB oder dem Schubbetrieb SB über ein Steuerglied S1.

Vollvariable Ventiltriebe, wie die eingangs genannten elektrohydraulisch oder elektromagnetisch arbeitenden Ventiltriebe, werden häufig zu einer Entdrosselung des Motors eingesetzt und können dabei Funktionen einer herkömmlichen Drosselklappe D teilweise oder auch vollständig übernehmen. Auch bei solchen entdrosselten Systemen ist aber unter bestimmten Bedingungen ein Saugrohrunterdruck nötig. Dieser kann z.B. wegen einer besseren Gemischaufbereitung bei niederen Lasten erforderlich sein. Auch motorische Anforderungen, wie z.B. Unterdruckbereitstellung für die Tankentlüftung oder einen Bremskraftverstärker können bei entdrosselten Systemen einen geringen Saugrohrunterdruck verlangen. Werden nun die Gaswechselventile EV, AV im Schubbetrieb SB geschlossen, stellt sich im Saugrohr SR Umgebungsdruck ein.

Mit der in Fig. 2 dargestellten Funktionalität ist es möglich, in Abhängigkeit des Saugrohrdrucks pS einzelne Zylinder Z zum Erzeugen von Unterdruck freizugeben. Damit ist es z. B. möglich, zuerst alle Zylinder Z zu schließen, um dann, wenn der Saugrohrdruck pS größer als ein Soll-Saugrohrdruck pSsoll wird, dem ein vorgebbarer Versatz OF hinzuaddiert sein kann, einen oder mehrere Zylinder Z wieder zu aktivieren. Die aktivierten Zylinder Z wirken wie eine Luftpumpe und erzeugen auf diese Weise den gewünschten Unterdruck.

Bei dem in Fig. 2 gezeigten Verfahrensablauf werden mittels eines Summierglieds A der Soll-Saugrohrdruck pSsoll und der eventuelle Versatz OF addiert und anschließend die so erhaltene Summe mit dem Saugrohrdruck pS in einem Vergleicher K1 verglichen. Das Vergleichsergebnis wird zusammen mit einem den Schubbetrieb SB angebenden Signal (z.B. logisch 1) einem Und-Glied zugeführt. Ferner wird entsprechend Fig. 1 in Abhängigkeit von der Funktionalität FV der Ventilsteuerung und dem Vorliegen des Schubbetriebs SB von einem Steuerglied S1 ein Ausgangssignal erzeugt, das zusammen mit dem Ausgangswert des Und-Glieds U und einer Funktionalität für die Luftpumpleistung FP einem weiteren Steuerglied S2 zugeführt wird, um eine entsprechende Ventilansteuerung VS zu bewirken und den gewünschten Unterdruck zu erzielen.

Bei vollvariablen Ventilbetrieben kann zusätzlich die Luftpumpleistung der aktivierten Zylinder Z in dem Schubbetrieb SB durch Variation der Ventil-Steuerkanten (Ventilansteuerzeitpunkte) verändert werden. Denkbar ist auch, die Luftpumpleistung mit dem gegebenenfalls vorhandenen Steuerventil SV zu beeinflussen.

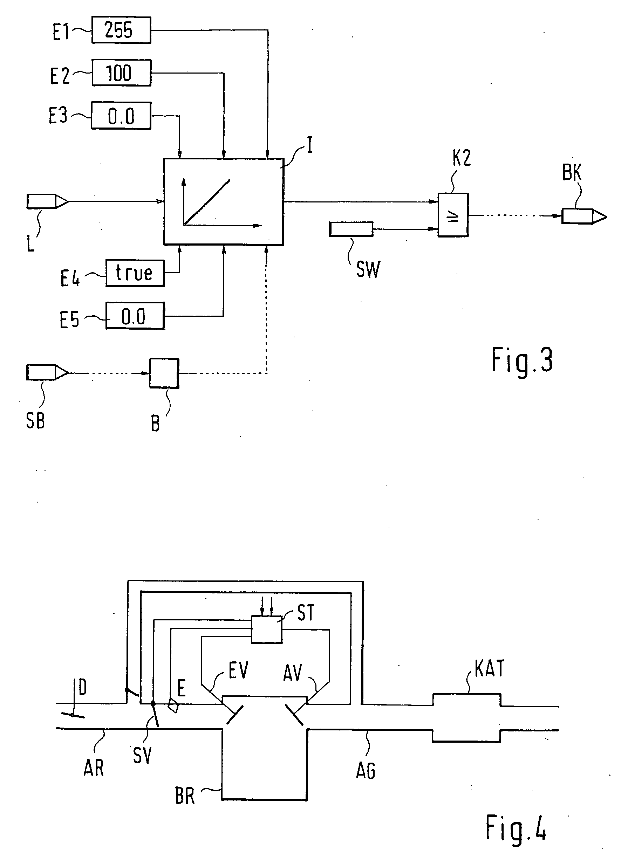

Sind nicht alle Zylinder Z in der gesamten Abschaltphase des Schubbetriebs SB geschlossen und ist somit ein gewisser Luftstrom zu dem Katalysator KAT vorhanden, kann ein gewisses Katalysator-Ausräumen nötig werden. Um das Katalysator-Ausräumen so gering und so selten wie möglich durchzuführen, ist eine weitere Funktionalität vorgesehen, mit der das Ausmaß der gepumpten Luft berücksichtigt wird, wie in Fig. 3 dargestellt.

Gemäß der in Fig. 3 dargestellten Vorgehensweise wird in der Abschaltphase des Schubbetriebs SB die von dem Motor bzw. der Brennkraftmaschine durchgepumpte Luftmasse L in einem Integrator I aufintegriert. Zur Luftmassenmessung wird das Signal eines Heißfilmluftmassenmesser HFM verwendet. Erst wenn die aufsummierte Luftmasse L im Schubbetrieb SB einen Schwellwert SW überschreitet, wird von einem weiteren Vergleicher K2 ein entsprechendes Signal erzeugt und ein vorgegebener Katalysator-Ausräumbetrieb BK freigegeben. Der Integrator I kann dabei in Abhängigkeit verschiedener weiterer Eingangsgrößen E1 bis E5 betrieben werden. Durch diese Erweiterung der Funktionalität wird ein Katalysator-Ausräumen nur durchgeführt, wenn die im Schubbetrieb SB durchgepumpte Luftmasse L den Katalysator KAT geflutet hat und deshalb ein Katalysator-Ausräumen unumgänglich ist.

## Patentansprüche

1. Verfahren zum Aufrechterhalten optimaler Bedingungen in einem Katalysator (KAT) einer Brennkraftmaschine während einer unbefeuerten Betriebsphase derselben,
**dadurch gekennzeichnet,**
**dass** in der unbefeuerten Betriebsphase eine auf die Sauerstoffzufuhr vom Ansaugrohr her einwirkende Ventilanordnung (EV, AV, VK) so gesteuert wird, dass die Sauerstoffzufuhr zum Katalysator zumindest teilweise unterbunden wird.

2. Verfahren nach Anspruch 1,
**dadurch gekennzeichnet,**
**dass** als Ventilanordnung mindestens ein variabel steuerbares Einlassventil (EV) und/oder Auslassventil (AV) zumindest eines Brennraums geschlossen wird/werden.

3. Verfahren nach Anspruch 1 oder 2,
**dadurch gekennzeichnet,**
**dass** als Ventilanordnung mindestens ein im Sauerstoffzufuhrkanal angeordnetes zusätzliches Steuerventil (SV) geschlossen wird.

4. Verfahren nach einem der Ansprüche 2 oder 3,
**dadurch gekennzeichnet,**
**dass** das mindestens eine Einlass- (EV) und/oder Auslasseventil (AV) individuell für jeden Zylinder nach einer vorgegebenen Funktionalität gesteuert wird/werden.

5. Verfahren nach einem der vorhergehenden Ansprüche,
**dadurch gekennzeichnet,**
**dass** die Ventilanordnung (EV, AV, SV) während der unbefeuerten Betriebsphase in Abhängigkeit eines geforderten Saugrohrunterdrucks gesteuert wird.

6. Verfahren nach einem der vorhergehenden Ansprüche,
**dadurch gekennzeichnet,**
**dass** in der unbefeuerten Betriebsphase zum Katalysator (KAT) durchgepumte Luft integriert wird und in Abhängigkeit von dem Integrationsergebnis die Ventilanordnung (EV AV, VK) gesteuert wird.
